# EUROPÄISCHE PATENTANMELDUNG

(11) **EP 0 778 396 A2**
(43) Veröffentlichungstag der Anmeldung: **11.06.1997**
(21) Anmeldenummer: 96810744.1
(22) Anmeldetag: 07.11.1996
(51) Int. Cl.: F01D 25/30

(54) **Auslasskanal für Gasturbogruppe**

(30) Priorität: 10.11.1995 DE 19541890
(71) Anmelder: ASEA BROWN BOVERI AG, 5400 Baden (CH)
(72) Erfinder: Basler, Benno, 4802 Strengelbach (CH); Fetescu, Mircea, 5408 Ennetbaden (CH)
(74) Vertreter: Klein, Ernest

(57) **Zusammenfassung**

Bei einer Gasturbogruppe (40, 41, 46) mit einem der Gasturbine (41) über einen Rauchgaskanal nachgeschalteten Wärmetauscher (3), besteht der Rauchgaskanal im wesentlichen aus einem Auslasskanal (4) und einem anschliessenden Krümmer (1) zur wahlweisen Umsteuerung des aus dem Auslasskanal (4) austretenden Abgasstromes in den Wärmetauscher (3) oder in einen Abgaskamin (2). Der Krümmer (1) leitet den Abgasstrom in einer ersten Stellung in den Wärmetauscher (3) und in einer zweiten Stellung in den Abgaskamin (2) ein. Der Krümmer (1) ist mindestens in der ersten Stellung dicht mit dem Wärmetauscher (3) und dem Auslasskanal (4) verbunden und ein Krümmungswinkel (W) des Krümmers (1) ist kleiner als sechzig Grad (W < 60°).

## Beschreibung

### Technisches Gebiet

Die Erfindung betrifft eine Gasturbogruppe mit einem der Gasturbine über einen Rauchgaskanal nachgeschalteten Wärmetauscher, wobei der Rauchgaskanal im wesentlichen aus einem Auslasskanal und einem anschliessenden Krümmer zur wahlweisen Umsteuerung des aus dem Auslasskanal austretenden Abgasstromes in den Wärmetauscher oder in einen Abgaskamin besteht, wobei der Krümmer den Abgasstrom in einer ersten Stellung in den Wärmetauscher und in einer zweiten Stellung in den Abgaskamin einleitet. Die Erfindung betrifft ebenfalls ein Verfahren zum Betrieb der Gasturbogruppe.

### Stand der Technik

Derartige Gasturbogruppen mit einem der Gasturbine über einen Rauchgaskanal nachgeschalteten Wärmetauscher sind bekannt aus DE 29 26 366 C2.
Dort wird eine Vorrichtung zur Abgasumsteuerung beschrieben, die mit einfachen konstruktiven Mitteln unter Verzicht auf Klappen oder Schieber realisiert werden kann. Der Krümmer zur Umsteuerung des Abgasstromes ist um eine horizontale Achse um 90° schwenkbar und mündet in einer ersten Stellung in einen Zuführkanal zu einem Abhitzedampferzeuger und in einer zweiten Stellung in den Abgaskamin. Der Abgaskamin ist über dem Krümmer auf einem Gestell angeordnet, so dass der Abgaskamin in der Achse des Rauchgaskanales liegt. Die Drehvorrichtung für den Krümmer ist jedoch relativ kompliziert und benötigt spezielle Lagerungen und Antriebe. Durch die grosse Anzahl an verschiedenen Komponenten sinkt zudem die Verfügbarkeit der Anlage, da durch die hohe Zahl der Komponenten auch die Ausfallswahrscheinlichkeit zunimmt.
Vorzugsweise ist in dem rechtwinkligen Krümmer ein Gitter zur Umlenkung des Abgasstroms angeordnet, um Strömungsverluste zu vermeiden.

Um Dichtungen zu vermeiden, ist am Uebergang zwischen Auslasskanal und Krümmer ein Ringspalt zur Bildung eines Ejektors vorgesehen. Durch diesen Ringspalt können jedoch Abgase austreten sowie durch eintretende Luft Exergieverluste in der Ausbeute der Abgase im Abhitzedampferzeuger entstehen. Die durch die Abgasverluste bedingten Leistungsverluste im Abhitzedampferzeuger können dabei bis zu 2% betragen und dies während der gesamten Lebensdauer der Anlage.

### Darstellung der Erfindung

Der Erfindung liegt die Aufgabe zugrunde, bei einer Gasturbogruppe der eingangs genannten Art den Krümmer weiter zu vereinfachen und Abgasverluste im Rauchgaskanal zu vermeiden.

Erfindungsgemäss wird dies dadurch erreicht, dass der Krümmer mindestens in der ersten Stellung dicht mit dem Wärmetauscher und dem Auslasskanal verbunden ist und dass ein Krümmungswinkel des Krümmers kleiner als sechzig Grad ist.

Ein Verfahren zum Betrieb der Gasturbogruppe zeichnet sich dadurch aus, dass die Gasturbogruppe mit dem Krümmer in der ersten Stellung oder in der zweiten Stellung abgestellt wird, dass der Krümmer gelöst wird, dass der Krümmer herausgezogen und um eine Drehachse gedreht wird, dass der Krümmer wieder eingeschoben wird und in der neuen Stellung fixiert wird und dass die Gasturbogruppe wieder in Betrieb gesetzt wird.

Die Vorteile der Erfindung sind unter anderem darin zu sehen, dass keine Abgas-Leckagen im Rauchgaskanal mehr auftreten. Dadurch kann die gesamte Wärmeenergie der Abgase zur Erzeugung von Dampf verwendet werden, wodurch der Wirkungsgrad der gesamten Anlage ansteigt. Dadurch dass der Krümmungswinkel kleiner als 60 Grad gewählt wird, werden die Strömungsverluste im Krümmer minimiert und auf Umlenkgitter im Krümmer kann verzichtet werden, was die Kosten des Krümmers senkt. Durch die Einfachheit und die geringe Anzahl der Komponenten wird zudem die Lebensdauer und die Verfügbarkeit der Anlage erhöht. Weiter sinken dadurch die Investitions- und die Unterhaltskosten der Anlage.

Es ist besonders zweckmässig, wenn der Abgaskamin neben dem Wärmetauscher auf dem Boden aufgebaut wird. Der Abgaskamin wird dadurch vereinfacht, da keine Gestelle und ähnliches mehr benötigt werden. Zudem wird die gesamte Anlage kompakter, d. h. die Gesamtlänge der Gasturbogruppe mit Abgaskamin und Wärmetauscher wird verkürzt, indem der Abgaskamin neben dem Wärmetauscher angeordnet wird.

Weiter ist es zweckmässig, das Verbindungsstück mit einem rechteckigen Querschnitt auszuführen. Dies erlaubt eine exakte Drehung um den gewünschten Winkel von 90, 180 und 270 Grad und erlaubt eine einfache Positionierung in der neuen Stellung. Weiter wird dadurch die Einströmung der Abgase in den Wärmetauscher verbessert, was eine höhere Wärmeausbeute zur Folge hat.

Die Anbringung des Dehnungselementes am Auslasskanal hat den Vorteil, dass der Krümmer nicht durch Dehnungselemente destabilisiert wird.

### Kurze Beschreibung der Zeichnung

In den Zeichnungen ist teilweise schematisch ein Ausführungsbeispiel der Erfindung anhand einer Gasturbogruppe dargestellt.
Es zeigen:
- Fig. 1: eine Draufsicht auf eine Vorrichtung zur Abgasumsteuerung;
- Fig. 2: das Detail II in Fig.1;
- Fig. 3: eine Seitenansicht einer weiteren Vorrichtung zur Abgasumsteuerung;
- Fig. 4: eine Draufsicht der Vorrichtung zur Abgasumsteuerung aus Fig.3.

Es sind nur die für das Verständnis der Erfindung wesentlichen Elemente gezeigt. Gleichwirkende Elemente sind in den verschiedenen Zeichnungen mit den gleichen Bezugszeichen versehen. Die Strömungsrichtung der Arbeitsmittel ist mit Pfeilen dargestellt.

### Weg zur Ausführung der Erfindung

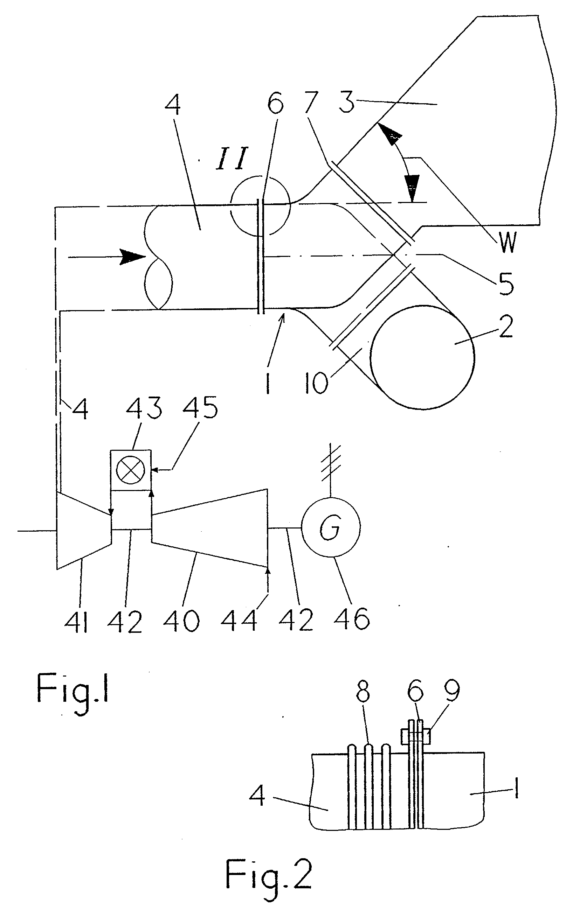

In Fig. 1 ist schematisch eine Gasturbogruppe dargestellt, im wesentlichen bestehend aus einem Verdichter 40, einer Turbine 41 und einem Generator 46, die über eine Welle 42 verbunden sind, sowie einer Brennkammer 43. Im Verdichter 40 wird Luft über eine Luftzuführung 44 angesaugt, komprimiert und die verdichtete Luft in die Brennkammer 43 geleitet. Dort wird der Verbrennungsluft Brennstoff 45 zugeführt und das Brennstoff-Luft-Gemisch verbrannt. Die entstandenen Rauchgase werden in die Turbine 41 eingeleitet, wo sie entspannt werden und ein Teil der Energie der Rauchgase in Drehenergie umgewandelt wird. Diese Drehenergie wird über die Welle 42 zum Antrieb des Generators 46 verwendet.

Die noch heissen Abgase werden über einen Rauchgaskanal, im wesentlichen bestehend aus einem Auslasskanal 4 und einem stromabwärts liegenden gekrümmten Verbindungsstück, einem Krümmer 1, abgeführt. Der Krümmer 1 verbindet wahlweise den Auslasskanal 4 mit einem Zuführkanal 10 eines Abgaskamines 2 oder mit einem Wärmetauscher 3, beispielsweise einem Abhitzedampferzeuger. Der Abgaskamin 2 und der Abhitzedampferzeuger 3 sind nebeneinander auf dem Fundament der Anlage angeordnet. Die Anordnung erfolgt so, dass der Krümmungswinkel W des Krümmeres 1 möglichst klein ist, d.h. mindestens kleiner als 60 Grad, um Strömungsverluste durch die Krümmung so gering wie möglich zu halten. Der Abgaskamin 2 wird zudem so angeordnet, dass er nicht mehr in der Achse 5 des Auslasskanales 4 liegt. Dadurch kann die Gesamtlänge der Anlage verkürzt werden.

Im Abhitzedampferzeuger 3 wird dem Abgas Wärmeenergie entzogen und damit Wasser verdampft. Nach Abgabe der Wärmeenergie wird das Abgas über einen nicht dargestellten Kamin ins Freie geleitet. Der im Abhitzedampferzeuger 3 produzierte Dampf wird einem Dampfverbraucher zugeführt, beispielsweise einer Dampfturbine. Wenn der Abgasstrom mittels des Krümmeres 1 in den Abgaskamin 2 geleitet wird, werden die Abgase ohne Rückgewinnung der Wärmeenergie direkt an die Umgebung abgegeben.

Ueblicherweise wird zuerst die Gasturbogruppe und der Abgaskamin 2 errichtet. Mittels des Krümmeres 1 wird der Abgaskamin 2 mit der Turbine 41 verbunden, worauf die Gasturbogruppe in Betrieb gesetzt werden kann. Der Abhitzedampferzeuger 3 wird nun neben der Gasturbogruppe errichtet. Ist der Abhitzedampferzeuger und der Dampfverbraucher fertig erstellt, wird die Gasturbogruppe abgeschaltet. Nun wird gewartet bis der Krümmer 1 genügend abgekühlt ist, was üblicherweise weniger als einen Tag dauert. Die Abkühlzeit ist im wesentlichen abhängig von der Turbinenaustrittstemperatur sowie der Abkühlgeschwindigkeit der Turbine 41. Danach wird der Krümmer 1 vom Auslasskanal 4 und dem Zuführkanal 10 gelöst. Der Krümmer wird um eine Drehachse 5 gedreht. Der Krümmer kann zur Vereinfachung der Drehung auch aus seiner Stellung herausgezogen, um 180 Grad gedreht und in die neue Stellung eingeschoben werden. Der Krümmer 1 wird mit dem Ausslasskanal 4 und dem Abhitzedampferzeuger 3 oder mit einem nicht dargestellten Zuführkanal zum Abhitzedampferzeuger verbunden.

Nach Fig.2 wird der Krümmer 1 mit dem Auslasskanal 4 mittels eines Flansches 6 und mit dem Abgaskamin 2 oder Abhitzedampferzeuger 3 mittels eines Flansches 7 verbunden. Die Verbindung erfolgt durch eine Verschraubung 9. Die Verbindung erfolgt jeweils völlig dicht, d.h. ohne Abgasverluste an den Verbindungsstellen. Am stromabwärtigen Ende des Auslasskanales 4 ist ein Dehnungselement 8 angebracht, beispielsweise ein Balg. Es nimmt die Wärmedehnungen des Rauchgaskanales 4 auf. Ein solches Dehnungselement 8 kann natürlich überall am Rauchgaskanal angeordnet werden, so am Krümmer 1, an den Zuführkanälen zum Abgaskamin 2 sowie zum Abhitzedampferzeuger 3. Das Dehnungselement 8 wird dabei entsprechend der zu erwartenden Wärmedehnung ausgelegt.

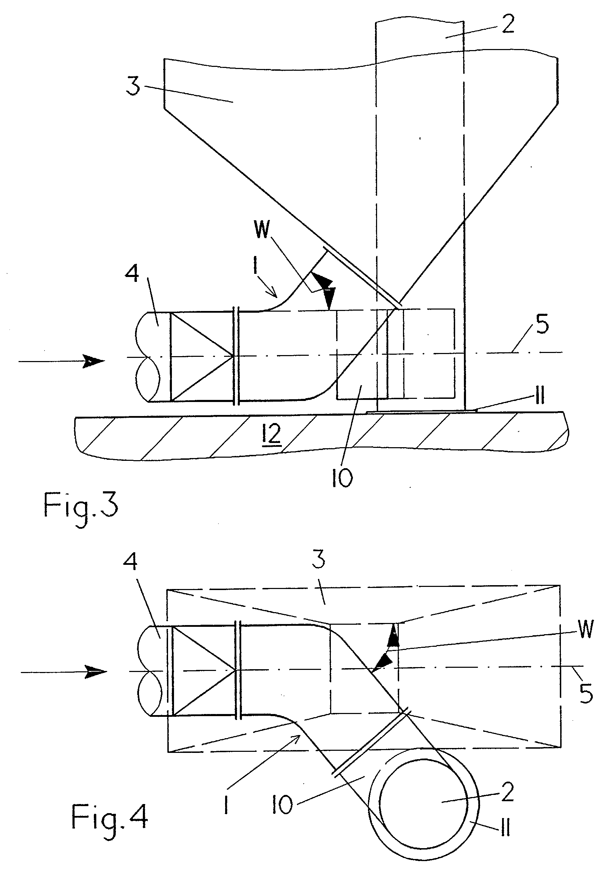

In Fig.3 und 4 ist ein Zwangsdurchlauf-Abhitzedampferzeuger 3 mit einem Krümmer 1 mit rechteckigem Querschnitt gezeigt. Der rechteckige Querschnitt wurde gewählt um die Einströmung der Abgase in den Abhitzedampferzeuger 3 zu verbessern. Der rechteckige Querschnitt vereinfacht zudem die Verbindung mit dem Abhitzedampferzeuger 3. Weiter wird die Drehung des Krümmeres 1, hier um 90 Grad, durch den rechteckigen Querschnitt vereinfacht. Der rechteckige Querschnitt erlaubt eine exakte Drehung um 90, 180, und 270 Grad. Durch die Wahl des Querschnittes können beliebige andere Winkel eingestellt werden. Bei einer Drehung des Krümmeres um 90 Grad muss der rechtekkige Querschnitt natürlich quadratisch ausgelegt werden. Der Auslasskanal 3 geht daher am stromabwärtigen Ende von einem runden Querschnitt kontinuierlich in einen rechteckigen Querschnitt über. Der Abgaskamin 2 ist mit einer Bodenplatte 11 auf einem Fundament 12 befestigt, so dass er neben den Abhitzedampferzeuger 3 zu liegen kommt. Die Befestigung der anderen Komponenten auf dem Fundament 12 ist nicht dargestellt.

In Fig.3 ist der Auslasskanal 4 mittels des Krümmeres 1 mit dem Abhitzedampferzeuger verbunden. Die zugehörige Gasturbogruppe und der Dampfverbraucher befinden sich in normalem Betrieb. Soll nun der Dampfverbraucher oder der Abhitzedampferzeuger 3 abgestellt werden, muss zuerst die Gasturbogruppe ausser Betrieb gesetzt werden. Nachdem der Krümmer 1 genügend abgekühlt ist, werden die Verschraubungen 9 gelöst und der Krümmer 1 aus seiner Position herausgezogen. Dann wird es um 90 Grad um die Drehachse 5 gedreht und in die neue Position eingeschoben.

In Fig.4 ist der Krümmer in seiner neuen Position mit dem Zuführkanal zum Abgaskamin 2 verbunden. Sobald der Krümmer 1 fixiert ist, kann die Gasturbogruppe wieder in Betrieb gesetzt werden. Die Arbeiten im Abhitzedampferzeuger 3 oder im Dampfverbraucher können während des Betriebes der Gasturbogruppe ausgeführt werden.

Nicht dargestellt ist die Anordnung von mehreren Gasturbogruppen nebeneinander. Dort gilt jedoch das gleiche wie bereits oben erwähnt. Durch die Anordnung des Abgaskamines neben dem Wärmetauscher wird es jedoch ermöglicht, das mehrere Gasturbogruppen den gleichen Abgaskamin verwenden. Der Abgaskamin muss dann jedoch so modifiziert werden, dass die Abgase der einen Gasturbogruppe nicht die andere Gasturbogruppe beeinträchtigen. Dies kann beispielsweise durch den Einbau von Trennwänden oder kleinen Abgaskaminen in den Gesamt-Abgaskamin erreicht werden, wobei beispielsweise die kleinen Kamine eine geringere Höhe als der Gesamt-Kamin aufweisen können.

Selbstverständlich ist die Erfindung nicht auf das gezeigte und beschriebene Ausführungsbeispiel beschränkt. Die Art des Abhitzedampferzeugers ist beliebig und erfindungsunwesentlich, es kann ein beliebiger Wärmetauscher verwendet werden. Die Ausgestaltung des Dehnungselementes wird entsprechend der Wärmedehnung gewählt und kann natürlich auch mit anderen Mitteln erfolgen. An den Uebergangsstellen zum Krümmer können auch Dichtungen angeordnet werden. Sie können zusätzlich so ausgelegt werden, dass sie Wärmedehnungen aufnehmen können. Anstatt der Verschraubung zum Verbinden des Krümmeres mit den restlichen Komponenten können beliebige lösbare Verbindungen gewählt werden, beispielsweise hydraulische Klemmen. Der Krümmer kann dann beispielsweise auch im heissen Zustand montiert und demontiert werden, indem durch die Klemmen eine gewisse Dehnung (bezogen auf einen kalten Krümmer) aufgebracht wird.

### Bezugszeichenliste

- 1: Krümmer
- 2: Abgaskamin
- 3: Wärmetauscher / Abhitzedampferzeuger
- 4: Auslasskanal
- 5: Drehachse
- 6: Flansch Auslasskanal
- 7: Flansch Abhitzedampferzeuger und Abgaskamin
- 8: Dehnungselement
- 9: Verschraubung
- 10: Zuführkanal
- 11: Bodenplatte
- 12: Fundament
- W: Krümmungswinkel
- 40: Verdichter
- 41: Turbine
- 42: Welle
- 43: Brennkammer
- 44: Luftzuführung
- 45: Brennstoff
- 46: Generator

## Patentansprüche

1. Gasturbogruppe (40, 41, 46) mit einem der Gasturbine (41) über einen Rauchgaskanal nachgeschalteten Wärmetauscher (3), wobei der Rauchgaskanal im wesentlichen aus einem Auslasskanal (4) und einem anschliessenden Krümmer (1) zur wahlweisen Umsteuerung des aus dem Auslasskanal (4) austretenden Abgasstromes in den Wärmetauscher (3) oder in einen Abgaskamin (2) besteht, wobei der Krümmer (1) den Abgasstrom in einer ersten Stellung (Fig.3) in den Wärmetauscher (3) und in einer zweiten Stellung (Fig.4) in den Abgaskamin (2) einleitet,
dadurch gekennzeichnet,
dass der Krümmer (1) mindestens in der ersten Stellung (Fig.3) dicht mit dem Wärmetauscher (3) und dem Auslasskanal (4) verbunden ist und dass ein Krümmungswinkel (W) des Krümmers (1) kleiner als sechzig Grad ist (W < 60°).

2. Kraftwerksanlage nach Anspruch 1,
dadurch gekennzeichnet,
dass der Wärmetauscher ein Abhitzedampferzeuger (3) ist.

3. Gasturbogruppe nach Anspruch 1,
dadurch gekennzeichnet,
dass der Abgaskamin (2) auf dem Boden neben dem Wärmetauscher (3) angeordnet ist.

4. Gasturbogruppe nach Anspruch 1,
dadurch gekennzeichnet,
dass der Krümmer (1) einen rechteckigen Querschnitt aufweist.

5. Gasturbogruppe nach Anspruch 1,
dadurch gekennzeichnet,
dass am Rauchgaskanal (1, 4) mindestens ein Dehnungselement (8) zur Aufnahme von Wärmedehnungen angeordnet ist.

6. Gasturbogruppe nach Anspruch 5,
dadurch gekennzeichnet,
dass das Dehnungselement (8) am stromabwärtigen Ende des Auslasskanales (4) angeordnet ist.

7. Verfahren zum Betrieb der Gasturbogruppe nach Anspruch 1,
dadurch gekennzeichnet,
dass die Gasturbogruppe mit dem Krümmer (1) in der ersten Stellung (Fig.3) oder in der zweiten Stellung (Fig.4) abgestellt wird, dass der Krümmer (1) gelöst wird, dass der Krümmer (1) herausgezogen und um eine Drehachse (5) gedreht wird, dass der Krümmer (1) wieder eingeschoben wird und in der neuen Stellung (Fig.4 oder Fig.3) fixiert wird und dass die Gasturbogruppe wieder in Betrieb gesetzt wird.
